# EUROPÄISCHE PATENTSCHRIFT

(11) **EP 3 071 867 B1**
(45) Veröffentlichungstag und Bekanntmachung des Hinweises auf die Patenterteilung: **23.08.2017**
(21) Anmeldenummer: 14783602.7
(22) Anmeldetag: 09.10.2014
(51) Int. Cl.: F16K 11/04, B65B 3/22, B67C 3/28

(54) **ABFÜLLVENTIL FÜR FLÜSSIGKEITEN**
FILLING VALVE FOR LIQUIDS
ROBINET DE REMPLISSAGE POUR DES LIQUIDES

(30) Priorität: 19.11.2013 DE 102013112770
(43) Veröffentlichungstag der Anmeldung: 28.09.2016
(73) Patentinhaber: Elopak AS, 3431 Spikkestad (NO)
(72) Erfinder: AUER, Dirk, 40670 Meerbusch (DE); BARTH, Peter, 52078 Aachen (DE); HARTMANN, Thomas, 41352 Korschenbroich (DE); SPELTEN, Franz-Willi, 41844 Wegberg (DE)
(74) Vertreter: Kohlmann, Kai
(86) Internationale Anmeldenummer: PCT/EP2014/071634
(87) Internationale Veröffentlichungsnummer: WO 2015/074803

(56) Entgegenhaltungen:
- WO-A1-97/15493
- WO-A1-2011/049505
- WO-A2-2011/060853
- FR-A- 1 601 262

## Beschreibung

Die Erfindung betrifft ein Abfüllventil für Flüssigkeiten umfassend einen Flüssigkeitszulauf in einen Ventilraum, einen Ventilsitz, mindestens ein mit dem Ventilsitz zusammenwirkendes Verschlusselement, einen Auslass für die Flüssigkeit, einen an dem Auslass angeordneten zylindrischer Auslauf, der mehrere in Achsrichtung nebeneinander angeordnete Durchgänge aufweist, wobei die dem Verschlusselement zugewandte Oberfläche des Auslaufs einen Bestandteil des Ventilsitzes ausbildet.
Derartige Abfüllventile kommen beispielsweise zum schnellen Füllen von Behältern, insbesondere Verpackungen aus Verbundmaterial (Karton und PE-Beschichtung), mit einer Flüssigkeit (z.B. Säften) zum Einsatz.
Um eine Schaumbildung durch die Flüssigkeit zu reduzieren, soll der Auslauf eine möglichst laminare Strömung in dem Füllstrahl erzeugen. Am Auslass der Dosiervorrichtung ist deshalb der zylindrische Körper mit feinen achsparallelen Durchgängen angeordnet. In dem eingeengten Raum der Durchgänge bilden sich kaum Verwirbelungen aus, so dass die Flüssigkeit weitestgehend beruhigt fließen kann. Der Durchmesser der Durchgänge ist derart bestimmt, dass eine Kapillarwirkung auf die Flüssigkeit in den Durchgängen ausgeübt wird. Die Durchgänge münden in dem ebenen Ventilsitz. Ein Abfüllventil mit einem derartigen zylindrischen Auslauf ist beispielsweise in der EP 0754 144 B1 offenbart. Ein gattungsgemäßes Abfüllventil ist aus der WO 97/15493 bekannt.

Aus der DE 10 2010 006 005 A1 ist ein weiteres gattungsgemäßes Füllventil bekannt, bei dem zur Reduktion der Schaumbildung beim Abgeben der Flüssigkeit vorgeschlagen wird, dass das Verschlusselement in eine erste und eine zweite Öffnungsstellung bringbar ist, wobei in der zweiten Öffnungsstellung die Durchflussquerschnittsfläche zwischen dem Ventilsitz und dem Verschlusselement grösser als in der ersten Öffnungsstellung ist. Das Verschlusselement weist ein erstes und ein zweites, unabhängig voneinander bewegliches Teil auf, wobei in Durchflussrichtung der Flüssigkeit durch die Dosiervorrichtung das erste Teil von dem zweiten Teil umgeben ist und die Teile derart angeordnet sind, dass das Öffnen des ersten Teils das Verschlusselement in die erste Öffnungsstellung und das Öffnen des zweiten Teils das Verschlusselement in die zweite Öffnungsstellung bringt.

In der Praxis hat sich herausgestellt, dass in fruchtfleischhaltigen Flüssigkeiten enthaltene Fasern die Durchgänge des Auslaufs verstopfen können. Insbesondere legen sich die Fasern über den überbrückenden Bereich zwischen zwei benachbarten Durchgängen.

In der EP 00 99 582 A2 wird vorgeschlagen, den Abstand der Eintrittsöffnungen zwischen den Durchgängen des Auslaufs zu minimieren, um den Aufbau von Fruchtfleischfasern zwischen den Eintrittsöffnungen zu verhindern.

Die WO 2010/097730 A1 offenbart ein Füllventil, insbesondere zum Abfüllen von Fruchtsäften, in dessen zylindrischem Ventilraum eine konisch ausgebildete Drallvorrichtung für die Flüssigkeit angeordnet ist. Die konische Ausbildung reduziert die Wahrscheinlichkeit von Verstopfungen durch Fruchtfleisch oder Fasern.

Die EP 0278 560 A1 offenbart ein Füllventil mit einem am Auslass des Füllventils angeordneten Auslauf, der achsparallele Durchgänge aufweist. Der Durchmesser der Durchgänge wird so bestimmt, dass Fruchtfleisch und Fasern die Durchgänge nicht verstopfen, jedoch der Fließwiderstand so hoch ist, dass die Flüssigkeit nur unter Ausübung von Druck aus dem Auslauf abgegeben wird.

Um die Verstopfung eines an einem Füllkopf für Fruchtsäfte angeordneten Strahlteilers durch Fruchtfleisch zu verhindern, offenbart die US 4 574 853 B1 einen Strahlteiler, der mehrere, in axialem Abstand konzentrisch zueinander angeordnete kegelstumpfförmige Teile aufweist. Ein an den Teilen angeordneter oberer Rand lenkt zumindest einen Teil des Flüssigkeitsstrahls in vertikaler Richtung um.

Ausgehend von diesem Stand der Technik liegt der Erfindung die Aufgabe zu Grunde, einen verbesserten Füllventilauslauf zu schaffen, bei dem insbesondere Verstopfungen der Durchgänge in dem Auslauf durch Fasern vermieden werden.

Diese Aufgabe wird bei einem Abfüllventil der eingangs erwähnten Art dadurch gelöst, dass die in der Oberfläche des Auslaufs mündenden Durchgänge ausgehend von der Oberfläche in Richtung des Verschlusselementes durch Röhrchen verlängert sind, das Verschlusselement Kappen aufweist und jedes Röhrchen durch eine der Kappen verschließbar ist, die das Röhrchen zumindest in der Schließstellung unter Ausbildung eines Ringraums umgibt.

Das Innere jeder Kappe ist vorzugsweise von einer Grundfläche, einer Mantelfläche und einer der Grundfläche gegenüberliegenden Kappenöffnung begrenzt. Jede Kappenöffnung umgibt ein umlaufender Rand.

In der Schließstellung sitzt jede Kappe entweder mit der Grundfläche dichtend auf einer oberen Eintrittsöffnung des Röhrchens oder mit dem umlaufenden Rand auf der Oberfläche des Auslaufs auf. In dem Ventilraum oberhalb des Ventilsitzes steht Flüssigkeit. Durch Öffnen des Verschlusselementes werden die Eintrittsöffnungen der Röhrchen freigegeben und die Flüssigkeit strömt durch den Ringraum in die Eintrittsöffnungen der Röhrchen. Durch diesen Strömungseffekt in dem Ringraum werden etwa vorhandene Fasern wirksam entfernt.

Eine stärkere Strömung und damit nochmals verbesserte Entfernung von Feststoffen im Bereich der Eintrittsöffnungen in die Röhrchen wird erreicht, wenn die Kappen jedes Röhrchen sowohl in der Schließ- als auch der Öffnungsstellung des Verschlusselements unter Ausbildung eines Ringraums umgeben.

Die Grundfläche, die Mantelfläche und die der Grundfläche gegenüberliegende Kappenöffnung begrenzen vorzugsweise einen zylindrischen Raum. Weisen sowohl der zylindrische Raum als auch jedes Röhrchen einen übereinstimmenden, vorzugsweise kreiszylindrischen Querschnitt auf, stellen sich in dem Ringraum beim Öffnen des Verschlusselementes gleichmäßige Strömungsverhältnisse ein. Sofern ein kegelstumpfförmiger Raum, der sich in Richtung des Ventilsitzes erweitert, ein Röhrchen mit kreiszylindrischem Querschnitt umgibt, ändern sich beim Öffnen des Verschlusselementes die Strömungsverhältnisse fortlaufend.

Sofern das Abfüllventil ein Verschlusselement mit einer Öffnungsstellung und einer Schließstellung aufweist, sind konstruktiv vorteilhaft sämtliche Kappen in einer strukturellen Einheit miteinander verbunden. Die strukturelle Einheit kann beispielsweise durch die Kappen verbindende Streben oder durch Zusammenfassen der Kappen in einem einzigen Bauteil ausgeführt sein. Die strukturelle Einheit ist an der in Richtung des Ventilsitzes weisenden Seite des Verschlusselementes befestigt. Die Kappen können auch als integraler Bestandteil an der in Richtung des Ventilsitzes weisenden Unterseite des Verschlusselementes ausgeführt sein.

Sofern das Abfüllventil ein zweiteiliges Verschlusselement mit einer ersten und einer zweiten Öffnungsstellung sowie einer Schließstellung aufweist, sind die Kappen jedes Teils gruppenweise in einer strukturellen Einheit miteinander verbunden. Die strukturellen Einheiten können beispielsweise durch die Kappen verbindende Streben oder durch Zusammenfassen der Kappen einer Gruppe in einem einzigen Bauteil ausgeführt sein. Eine der beiden strukturellen Einheiten ist an der in Richtung des Ventilsitzes weisenden Seite des ersten Teils und die andere der beiden strukturellen Einheiten ist an der in Richtung des Ventilsitzes weisenden Seite des zweiten Teils des Verschlusselementes befestigt. Der Aufbau eines Abfüllventils mit einem zweiteiligen Verschlusselement ist dem Fachmann beispielsweise aus der DE 10 2010 006 005 A1 bekannt, deren Inhalt ausdrücklich in die Offenbarung dieser Anmeldung einbezogen wird.

Um die Dichtwirkung zu verbessern, bestehen die Kappen vorzugsweise aus einem elastischen Material, insbesondere aus Kunststoff. Alternativ kann die Kappe aus einem rigidem Material, beispielsweise Metall, bestehen, wobei an jeder Kappe eine Dichtfläche aus elastischem Material angeordnet ist. Die Dichtfläche ist an der Grundfläche der Kappe angeordnet, wenn die Kappe in der Schließstellung mit der Grundfläche die obere Eintrittsöffnung des Röhrchens abdichtet. Sofern der um die Kappenöffnung umlaufende Rand der Kappe im Zusammenwirken mit der Oberfläche des Ventilauslaufs die Röhrchen verschließen soll, ist die Dichtfläche vorzugsweise auf der Oberfläche des umlaufenden Rands angebracht.

Um Ablagerungen von Fasern auf dem Ventilsitz zu vermeiden, befindet sich zwischen den Röhrchen ein vorzugsweise mittig angeordneter Drainagedurchgang in dem Auslauf, an dem kein Röhrchen angeordnet ist. Dieser Durchgang wird durch ein Dichtelement verschlossen, das beim Aufsitzen der Kappen auf den Eintrittsöffnungen der Röhrchen den Drainagedurchgang verschließt. Beim Abheben der an dem Ventilkörper angeordneten Kappen, wird auch der Drainagedurchgang freigegeben.

Nachfolgend wird die Erfindung anhand der Figuren näher erläutert. Es zeigen:
- **Figur 1**: eine perspektivische Teilansicht eines erfindungsgemäßen Abfüllventils in geschnittener Darstellung in Öffnungsstellung,
- **Figur 2**: das Abfüllventil nach Figur 1 in Schließstellung,

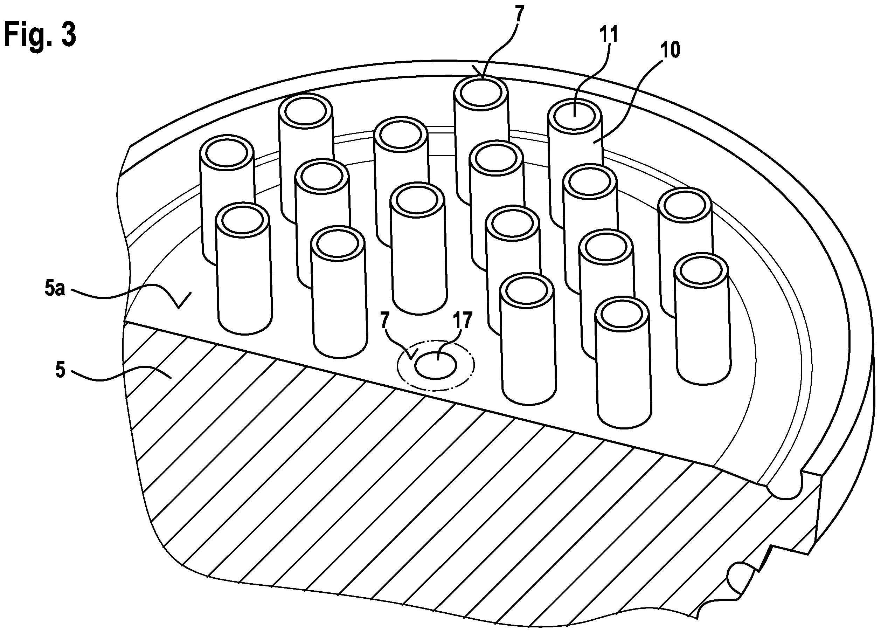

- **Figur 3**: eine perspektivische Detaildarstellung des Ventilsitzes im Schnitt sowie
- **Figur 4**: eine schematische Darstellung der Strömungsverhältnisse am Ventilsitz des Abfüllventils in der Öffnungs- und Schließstellung.

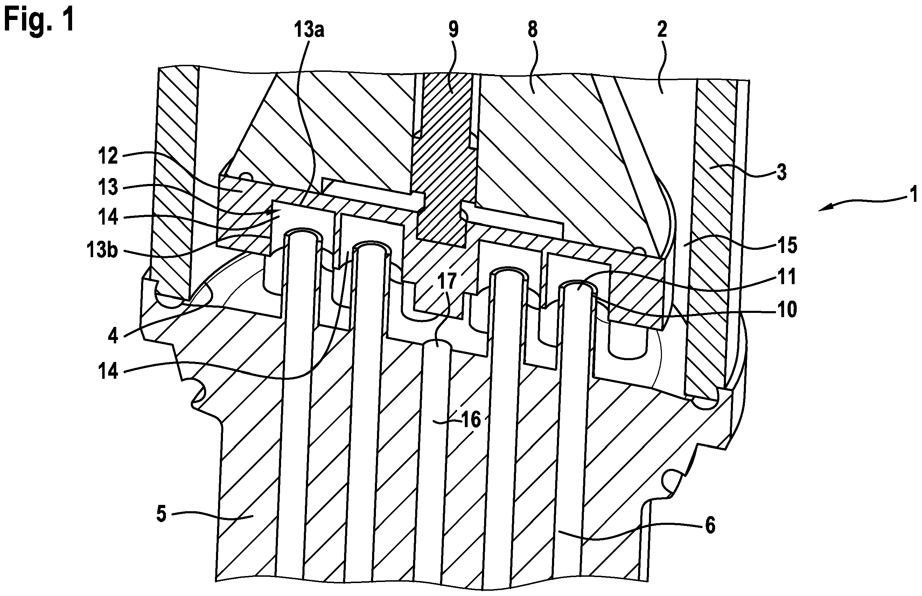

Figur 1 zeigt einen Teilschnitt durch ein erfindungsgemäßes Abfüllventil (1) zum Abfüllen von fruchtfleischhaltigen Flüssigkeiten, insbesondere Säften in Behälter. Das Abfüllventil (1) umfasst einen in der Teildarstellung nicht dargestellten Flüssigkeitszulauf für die Flüssigkeit in einen Ventilraum (2), der durch das Ventilgehäuse (3) begrenzt wird, und einen an der Unterseite des Ventilgehäuses (3) befindlichen Auslass (4), an dem ein zylindrischer, im Ausführungsbeispiel kreiszylindrischer, Auslauf (5) befestigt ist. Der Ventilraum ist im Betrieb des Abfüllventils vollständig mit Flüssigkeit gefüllt.

Der zylindrische Auslauf (5) weist mehrere in Achsrichtung nebeneinander angeordnete Durchgänge (6) auf. Die in Richtung des Ventilraums (2) weisende, ebene Oberfläche (5a) des Auslaufs (5) ist Bestandteil des Ventilsitzes (7) des Abfüllventils (1).

In dem Ventilraum (2) ist ein mittels eines Antriebs hin- und herbewegliches Verschlusselement (8) angeordnet, wobei der Antrieb beispielsweise über eine Antriebsstange (9) erfolgt, die abgedichtet aus dem Ventilgehäuse (3) herausgeführt ist.

Die in der Oberfläche (5a) mündenden Durchgänge (6) sind ausgehend von der Oberfläche (5a) des Auslaufs (5) in Richtung des Verschlusselementes (8) durch Röhrchen (10) verlängert. Hierdurch werden die Eintrittsöffnungen (11) für die Flüssigkeit aus der Ebene der Oberfläche (5a) des Auslaufs (5) nach oben in Richtung des Verschlusselementes (8) verlagert. Jeder Durchgang (6) in dem Auslauf (5) wird durch einen fluchtenden Durchgang in einem der Röhrchen (10) verlängert.

An der Unterseite des Verschlusselementes (8) ist ein Bauteil (12) befestigt, dass eine Vielzahl von Kappen (13) miteinander zu einer strukturellen Einheit verbindet, wobei jedes Röhrchen (10) durch eine der Kappen (13) verschließbar ist. Das Innere jeder Kappe (13) ist von einer Grundfläche (13a), einer Mantelfläche (13b) und einer der Grundfläche (13a) im parallelen Abstand gegenüberliegenden Kappenöffnung begrenzt.

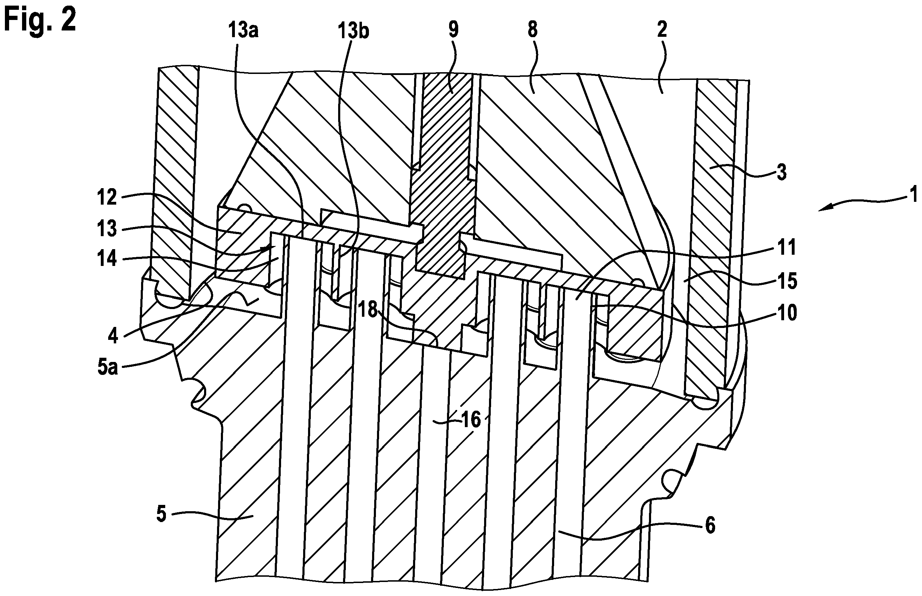

Die Kappen (13) umgeben jedes Röhrchen (10) sowohl in der in Figur 1 dargestellten Öffnungsstellung als auch in der in Figur 2 dargestellten Schließstellung des Verschlusselementes (8) unter Ausbildung eines Ringraumes (14) zwischen der Außenwand des Röhrchens (10) und der Mantelfläche (13b) der Kappe (13).

In der in Figur 2 dargestellten Schließstellung sitzen sämtliche Kappen (13) mit ihrer Grundfläche (13a) dichtend auf den oberen Eintrittsöffnungen (11) der Röhrchen (10) auf. In dem Ringraum (14) befindet sich dabei abzufüllende Flüssigkeit, die in dem Ventilraum (2) steht. Die Flüssigkeit gelangt über einen Spalt (15) zwischen dem Ventilgehäuse (3) und der Außenmantelfläche des Verschlusselementes (8) unabhängig von der Stellung des Verschlusselementes (8) stets auch in den Bereich des Ventilraums (2), der sich zwischen der Oberfläche (5a) des Auslaufs (5) und der Unterseite des Verschlusselementes (8) befindet.

Wird nun das Verschlusselement (8) aus der in Figur 2 dargestellten Schließstellung in die in Figur 1 dargestellte Öffnungsstellung mit Hilfe der Antriebsstange (9) gebracht, werden die Grundflächen (13a) der Kappen (13) von den Eintrittsöffnungen (11) der Röhrchen (10) abgehoben und die Eintrittsöffnungen (11) der Röhrchen (10) werden von der durch den Ringraum (14) strömenden Flüssigkeit überströmt. Hierdurch werden im Bereich der Röhrchen vorhandene Fasern wirksam entfernt.

Die Strömung im Ringraum (14) und das Überströmen der Eintrittsöffnungen (11) der Röhrchen (10) beim Anheben des Verschlusselementes (8) werden dadurch gewährleistet, dass der die Eintrittsöffnung (11) begrenzende obere Rand jedes Röhrchens (10) sich im Betrieb des Abfüllventils stets unterhalb des Flüssigkeitsspiegels in dem Ventilraum (2) befindet. Nach dem Prinzip der kommunizierenden Gefäße steigt der Flüssigkeitsspiegel in dem Ringraum (14) an und überströmt schließlich den oberen Rand der Eintrittsöffnungen (11).

Um Ablagerungen von Fasern und/oder anderen Feststoffen in der Flüssigkeit auf der Oberfläche (5a) des Auslaufs (5) zu vermeiden, befindet sich zwischen den Röhrchen (10) mittig des Ventilsitzes (7) ein Drainagedurchgang (16), der in der Oberfläche (5a) des Auslaufs (5) mündet. Die Mündung (17) des Durchgangs (16) wird durch ein Dichtelement (18) verschlossen, das beim Aufsitzen der Kappen (13) mit den Grundflächen auf den Eintrittsöffnungen (11) der Röhrchen (10) den Drainagedurchgang (16) verschließt, wie dies insbesondere aus Figur 2 erkennbar ist. Das Dichtelement (18) ist konstruktiv vorteilhaft ebenfalls als integraler Bestandteil des Bauteils (12) ausgeführt, das an der Unterseite des Verschlusselementes (8) befestigt ist. Beim Abheben der Grundflächen der Kappen (13) von den Röhrchen (10) wird durch die mechanische Kopplung automatisch auch der Drainagedurchgang (16) freigegeben, wie dies insbesondere aus Figur 1 erkennbar ist.

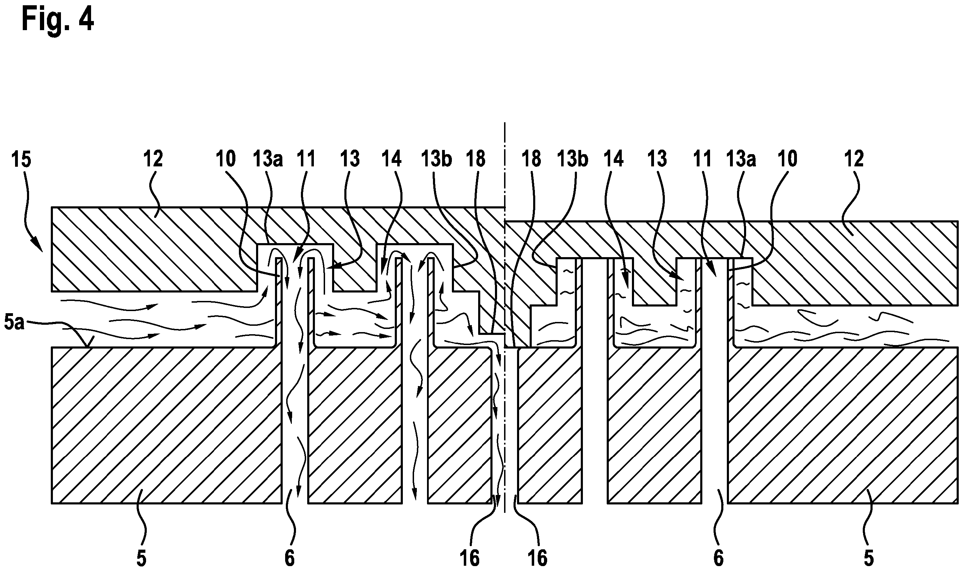

Figur 4 verdeutlicht die Strömungsverhältnisse des Abfüllventils (1), bei dem die Kappen (13) jedes Röhrchen (10) sowohl in der links in Figur 4 schematisch dargestellten Öffnungsstellung als auch der rechts in Figur 4 schematisch dargestellten Schließstellung des Verschlusselementes (8) unter Ausbildung des Ringraumes (14) umgeben.

Beim Öffnen des Verschlusselementes strömt die Flüssigkeit über den Spalt (15) seitlich in den Bereich zwischen der Oberfläche (5a) des Auslaufs (5) und der Unterseite des Verschlusselementes (8) ein. Die nachströmende Flüssigkeit bewirkt einen Anstieg der Flüssigkeit in dem Ringraum (14), die den oberen Rand der Röhrchen (10) überströmt und über die Eintrittsöffnung (11) in den Durchgang (6) gelangt.

**Bezugszeichenliste**

| **Nr.** | **Bezeichnung** |
|---|---|
| 1 | Abfüllventil |
| 2 | Ventilraum |
| 3 | Ventilgehäuse |
| 4 | Auslass |
| 5 | Auslauf |
| 5a | Oberfläche |
| 6 | Durchgänge |
| 7 | Ventilsitz |
| 8 | Verschlusselement |
| 9 | Antriebsstange |
| 10 | Röhrchen |
| 11 | Eintrittsöffnung |
| 12 | Bauteil |
| 13 | Kappen |
| 13a | Grundfläche |
| 13b | Mantelfläche |
| 14 | Ringraum |
| 15 | Spalt |
| 16 | Drainagedurchgang |
| 17 | Mündung |
| 18 | Dichtelement |

## Patentansprüche

1. Abfüllventil (1) für Flüssigkeiten umfassend einen Flüssigkeitszulauf in einen Ventilraum (2), einen Ventilsitz (7), ein mit dem Ventilsitz (7) zusammenwirkendes zwischen mindestens einer Öffnungsstellung und einer Schließstellung hin- und her bewegliches Verschlusselement (8), einen Auslass für die Flüssigkeit (4), einen an dem Auslass (4) angeordneten zylindrischen Auslauf (5), der mehrere in Achsrichtung nebeneinander angeordnete Durchgänge (6) aufweist, wobei die dem Verschlusselement (8) zugewandte Oberfläche (5a) des Auslaufs (5) einen Bestandteil des Ventilsitzes ausbildet,
**dadurch gekennzeichnet, dass**
- die in der Oberfläche (5a) des Auslaufs (5) mündenden Durchgänge (6) ausgehend von der Oberfläche (5a) in Richtung des Verschlusselements (8) durch Röhrchen (10) verlängert sind,
- das Verschlusselement (8) Kappen (13) aufweist,
- jedes Röhrchen (10) durch eine der Kappen (13) verschließbar ist, die das Röhrchen (10) zumindest in der Schließstellung unter Ausbildung eines Ringraums (14) umgibt.

2. Abfüllventil nach Anspruch 1, **dadurch gekennzeichnet, dass** die Kappen (13) jedes Röhrchen (10) sowohl in der Schließ- als auch Öffnungsstellung des Verschlusselementes (8) unter Ausbildung eines Ringraums (14) umgeben.

3. Abfüllventil nach Anspruch 1 oder 2, **dadurch gekennzeichnet, dass** das Innere jeder Kappe (13) von einer Grundfläche (13a), einer Mantelfläche (13b) und einer der Grundfläche (13a) gegenüberliegenden Kappenöffnung begrenzt ist.

4. Abfüllventil nach Anspruch 3, **dadurch gekennzeichnet, dass** jede Kappenöffnung ein umlaufender Rand umgibt.

5. Abfüllventil nach Anspruch 3 oder 4, **dadurch gekennzeichnet, dass** das Innere jeder Kappe (13) zylindrisch ist.

6. Abfüllventil nach Anspruch 3 oder 4, **dadurch gekennzeichnet, dass** das Innere jeder Kappe kegelstumpfförmig ist, wobei die Grundfläche kleiner als die Kappenöffnung ist.

7. Abfüllventil nach einem der Ansprüche 1 bis 6, **dadurch gekennzeichnet, dass** die Kappen (13) des Verschlusselementes in einer strukturellen Einheit (12) miteinander verbunden sind.

8. Abfüllventil nach einem der Ansprüche 1 bis 6, **dadurch gekennzeichnet, dass**
- das Verschlusselement in eine erste und eine zweite Öffnungsstellung bringbar ist, wobei in der zweiten Öffnungsstellung die Durchflussquerschnittsfläche zwischen dem Ventilsitz und dem Verschlusselement grösser als in der ersten Öffnungsstellung ist
- das Verschlusselement ein erstes und ein zweites, unabhängig voneinander bewegliches Teil aufweist, wobei in Durchflussrichtung der Flüssigkeit durch das Abfüllventil das erste Teil von dem zweiten Teil umgeben ist und
- die Teile derart angeordnet sind, dass das Öffnen des ersten Teils das Verschlusselement in die erste Öffnungsstellung und das Öffnen des zweiten Teils das Verschlusselement in die zweite Öffnungsstellung bringt.

9. Abfüllventil nach Anspruch 8, **dadurch gekennzeichnet, dass** die Kappen (13) jedes Teils des Verschlusselementes in einer strukturellen Einheit (12) miteinander verbunden sind.

10. Abfüllventil nach einem der Ansprüche 1 bis 9, **dadurch gekennzeichnet, dass** die Kappen (13) aus einem elastischen Material bestehen.

11. Abfüllventil nach einem der Ansprüche 1 bis 9, **dadurch gekennzeichnet, dass** an jeder Kappe (13) eine Dichtfläche aus elastischem Material angeordnet ist.

12. Abfüllventil nach einem der Ansprüche 3 bis 6 und Anspruch 11, **dadurch gekennzeichnet, dass** die Dichtfläche an der Grundfläche der Kappe angeordnet ist.

13. Abfüllventil nach einem der Ansprüche 4 bis 6 und Anspruch 11, **dadurch gekennzeichnet, dass** die Dichtfläche an dem umlaufenden Rand der Kappe angeordnet ist.

14. Abfüllventil nach einem der Ansprüche 1 bis 13, **dadurch gekennzeichnet, dass** die Kappen (13) aus Kunststoff bestehen.

15. Abfüllventil nach einem der Ansprüche 1 bis 14, **dadurch gekennzeichnet, dass** zwischen den Röhrchen (10) ein Drainagedurchgang (16) angeordnet ist, der in der Oberfläche des Auslaufs (5) mündet und ein Dichtelement (18) zum Verschließen des Drainagedurchgangs (16) an dem Verschlusselement (8) derart angeordnet ist, dass in dessen Schließstellung der Drainagedurchgang (16) durch das Dichtelement (18) geschlossen ist.

## Claims

1. A filling valve (1) for liquids, comprising a liquid feed into a valve chamber (2), a valve seat (7), a closure element (8) movable to and fro between at least one open position and a closed position, and interacting with the valve seat (7), an outlet for the liquid (4), a cylindrical discharge element (5) arranged on the outlet (4), which has a plurality of passages (6) arranged adjacent to each other in the axial direction, wherein the surface (5a) of the discharge element (5) facing the closure element (8) forms a part of the valve seat, **characterized in that**
- the passages (6) opening in the surface (5a) of the discharge element (5) starting from the surface (5a) are lengthened in the direction of the closure element (8) by tubes (10),
- the closure element (8) has caps (13),
- each tube (10) can be closed by one of the caps (13) which surrounds the tube (10) at least in the closed position to form an annular space (14) .

2. The filling valve according to claim 1, **characterized in that** the caps (13) surround each tube (10) both in the closed and in the open position of the closure element (8) to form an annular space (14).

3. The filling valve according to claim 1 or 2, **characterized in that** the interior of each cap (13) is bounded by a base surface (13a), a lateral surface (13b) and a cap opening opposite the base surface (13a).

4. The filling valve according to claim 3, **characterized in that** each cap opening surrounds a circumferential edge.

5. The filling valve according to claim 3 or 4, **characterized in that** the interior of each cap (13)is cylindrical.

6. The filling valve according to claim 3 or 4, **characterized in that** the interior of each cap is frustroconical, wherein the base surface is smaller than the cap opening.

7. The filling valve according to any one of claims 1 to 6, **characterized in that** the caps (13) of the closure element are connected to one another in a structural unit (12).

8. The filling valve according to any one of claims 1 to 6, **characterized in that**
- the closure element can be brought into a first and a second open position of the closure element, wherein the flow cross-sectional area between the valve seat and the closure element is larger in the second open position than in the first open position,
- the closure element comprises a first and a second part which are movable independently of one another, wherein in the flow direction of the liquid through the filling valve, the first part is surrounded by the second part and
- the parts are arranged in such a manner that the opening of the first part brings the closure element into the first open position and the opening of the second part brings the closure element into the second open position.

9. The filling valve according to claim 8, **characterized in that** the caps (13) of each part of the closure element are combined with one another in a structural unit (12).

10. The filling valve according to any one of claims 1 to 9, **characterized in that** the caps (13) consist of an elastic material.

11. The filling valve according to any one of claims 1 to 9, **characterized in that** a sealing surface made of elastic material is disposed on each cap (13).

12. The filling valve according to any one of claims 3 to 6 and claim 11, **characterized in that** the sealing surface is arranged on the base surface of the cap.

13. The filling valve according to any one of claims 4 to 6 and claim 11, **characterized in that** the sealing surface is arranged on the circumferential edge of the cap.

14. The filling valve according to any one of claims 1 to 13, **characterized in that** the caps (13) consist of plastic.

15. The filling valve according to any one of claims 1 to 14, **characterized in that** a drain passage (16) is arranged between the tubes (10) which opens in the surface of the discharge element (5) and a sealing element (18) for closing the drain passage (16) is arranged on the closure element (8) in such a manner that in the closed position the drain passage (16) is closed by the sealing element (18).

## Revendications

1. Soupape de remplissage (1) de liquides, comportant une arrivée de liquide dans une chambre de soupape (2), un siège de soupape (7), un élément de fermeture (8), coopérant avec le siège de soupape (7), déplaçable en aller et retour entre au moins une position d'ouverture et une position de fermeture, une sortie (4) pour le liquide, un bec (5) cylindrique placé sur la sortie (4) qui comporte plusieurs passages (6) placés côte à côte en direction axiale, la surface (5a) du bec (5) qui fait face à l'élément de fermeture (8) étant un élément constitutif du siège de soupape,
**caractérisée en ce qu'**
- en partant de la surface (5a) dans la direction de l'élément de fermeture (8), les passages (6) débouchant dans la surface (5a) du bec (5) sont prolongés par des petits tubes (10),
- l'élément de fermeture (8) comporte des capuchons (13),
- chaque petit tube (10) est fermable par l'un des capuchons (13) qui entoure le petit tube (10) au moins dans la position de fermeture, en formant un espace annulaire (14).

2. Soupape de remplissage selon la revendication 1, **caractérisée en ce qu'**aussi bien dans la position de fermeture que dans la position d'ouverture de l'élément de fermeture (8), les capuchons (13) entourent chaque petit tube (10) en formant un espace annulaire (14).

3. Soupape de remplissage selon la revendication 1 ou 2, **caractérisée en ce que** l'intérieur de chaque capuchon (13) est délimité par une surface de base (13a), une surface d'enveloppe (13b) et un orifice de capuchon, en vis-à-vis de la surface de base (13a).

4. Soupape de remplissage selon la revendication 3, **caractérisée en ce que** chaque orifice de capuchon entoure un bord périphérique.

5. Soupape de remplissage selon la revendication 3 ou 4, **caractérisée en ce que** l'intérieur de chaque capuchon (13) est cylindrique.

6. Soupape de remplissage selon la revendication 3 ou 4, **caractérisée en ce que** l'intérieur de chaque capuchon est de forme tronconique, la surface de base étant plus petite que l'orifice de capuchon.

7. Soupape de remplissage selon l'une quelconque des revendications 1 à 6, **caractérisée en ce que** les capuchons (13) de l'élément de fermeture sont reliés les uns aux autres en une unité structurelle (12).

8. Soupape de remplissage selon l'une quelconque des revendications 1 à 6, **caractérisée en ce que**
- l'élément de fermeture peut être amené dans une première et dans une deuxième positions d'ouverture, dans la deuxième position d'ouverture, la surface de section transversale de débit entre le siège de soupape et l'élément de fermeture étant plus grande que dans la première position d'ouverture,
- l'élément de fermeture comporte une première et une deuxième pièces, mobiles indépendamment l'une de l'autre, dans la direction de débit du liquide à travers la soupape de remplissage, la première pièce étant entourée par la deuxième pièce, et
- les pièces sont placées de telle sorte que l'ouverture de la première pièce amène l'élément de fermeture dans la première position d'ouverture et l'ouverture de la deuxième pièce amène l'élément de fermeture dans la deuxième position d'ouverture.

9. Soupape de remplissage selon la revendication 8, **caractérisée en ce que** les capuchons (13) de chaque pièce de l'élément de fermeture sont reliés les uns aux autres en une unité structurelle (12).

10. Soupape de remplissage selon l'une quelconque des revendications 1 à 9, **caractérisée en ce que** les capuchons (13) sont en une matière élastique.

11. Soupape de remplissage selon l'une quelconque des revendications 1 à 9, **caractérisée en ce que** sur chaque capuchon (13) est placée une surface d'étanchéité en une matière élastique.

12. Soupape de remplissage selon l'une quelconque des revendications 3 à 6 et la revendication 11, **caractérisée en ce que** la surface d'étanchéité est placée sur la surface de base du capuchon.

13. Soupape de remplissage selon l'une quelconque des revendications 4 à 6 et la revendication 11, **caractérisée en ce que** la surface d'étanchéité est placée sur le bord périphérique du capuchon.

14. Soupape de remplissage selon l'une quelconque des revendications 1 à 13, **caractérisée en ce que** les capuchons (13) sont en matière plastique.

15. Soupape de remplissage selon l'une quelconque des revendications 1 à 14, **caractérisée en ce qu'**entre les petits tubes (10) est placé un passage de drainage (16) qui débouche dans la surface du bec (5) et un élément d'étanchéité (18) destiné à fermer le passage de drainage (16) est placé sur l'élément de fermeture (8) de telle sorte que dans la position de fermeture de ce dernier, le passage de drainage (16) soit fermé par l'élément d'étanchéité (18).
